# EUROPEAN PATENT APPLICATION

(11) **EP 2 926 664 A1**
(43) Date of publication of application: **07.10.2015**
(21) Application number: 13858355.4
(22) Date of filing: 29.11.2013
(51) Int. Cl.: A21B 5/03

(54) **APPARATUS FOR COOKING PANCAKES**

(30) Priority: 29.11.2012 KR 20120137202
(71) Applicant: Kang, Jeong Hwan, Seoul 150-868 (KR)
(72) Inventor: Kang, Jeong Hwan, Seoul 150-868 (KR)
(74) Representative: Cabinet Chaillot
(86) International application number: PCT/KR2013/011000
(87) International publication number: WO 2014/084660

(57) **Abstract**

The present invention relates to an apparatus for cooking pancakes and, more particularly, to an apparatus for cooking pancakes, in which multiple heating plates are stacked in a vertical direction so as to simultaneously and quickly cook multiple pancakes while reducing an occupied space, and in which the multiple heating plates are heated according to a preset program so as to enable even a beginner to easily cook pancakes.

## Description

### Technical Field

The present invention relates to an apparatus for cooking pancakes and, more particularly, to an apparatus for cooking pancakes, in which multiple heating plates are stacked in a vertical direction so as to simultaneously and quickly cook multiple pancakes while reducing an occupied space, and in which the multiple heating plates are heated according to a preset program so as to enable even a beginner to easily cook pancakes.

### Background Art

A pancake is one kind of thin flat cake, and is made by cooking sweet batter on a hot griddle or within a frying pan. Depending on a variety of regional recipes, there are various versions of pancakes. Although some pancakes are made by promoting expansion thereof with yeast or using fermented batter, most pancakes are quickly prepared cakes.

Since such pancakes have light texture, they are often consumed in the morning with maple syrup, butter, peanut butter or fruit placed thereon, and are widely used as snacks for children. Recently, with the development of a café culture, an increasing number of users visit cafés and order pancakes together with various kinds of drinks.

In general, multiple thin pancakes are served as a portion for one person. It is time consuming to cook multiple pancakes with a frying pan. For this reason, when multiple pancakes are served to a consumer, an initially cooked pancake is in a cooled state, so that a problem arises in that the consumer cannot have delicious pancakes. In addition, long cooking experience is required to cook a thin pancake without burning it, and there is an inconvenience in that a cook has to wait near a frying pan at all times.

### Disclosure

### Technical Problem

Accordingly, the present invention has been made keeping in mind the above problems occurring in the prior art, and an object of the present invention is to provide an apparatus for cooking pancakes, which is capable of simultaneously cooking multiple pancakes.

Another object of the present invention is to provide an apparatus for cooking pancakes, which is capable of simultaneously cooking multiple pancakes without occupying a wide area.

A further object of the present invention is to provide an apparatus for cooking pancakes, which controls the heating temperatures and times of heating plates according to a preset program so as to enable even a beginner to easily cook pancakes, and which does not require a great deal of effort from a cook in cooking pancakes.

Yet another object of the present invention is to provide an apparatus for cooking pancakes, which makes it possible to easily remove multiple cooked pancakes from heating plates.

### Technical Solution

In order to accomplish the above objects, the present invention provides an apparatus for cooking pancakes, including: a bottom heating plate provided with a heating wire; a first heating plate placed above the bottom heating plate, and provided with a heating wire; a second heating plate placed above the first heating plate, and provided with a heating wire; a cover heating plate placed above the second heating plate, and provided with a heating wire; and a coupling unit configured to couple the bottom heating plate, the first heating plate, the second heating plate and the cover heating plate to a vertical support housing of a main body housing, and configured to allow the first heating plate, the second heating plate and the cover heating plate to rotate in the same rotation direction.

In this case, the apparatus for cooking pancakes according to the present invention may further include: a first spacing member configured to keep the bottom heating plate and the first heating plate spaced apart; a second spacing member configured to keep the first heating plate and the second heating plate spaced apart; and a third spacing member configured to keep the second heating plate and the cover heating plate spaced apart.

Preferably, the apparatus for cooking pancakes according to the present invention may further include: a user interface unit configured to receive user commands; and a control unit configured to control the heating temperatures and heating times of the bottom heating plate, the first heating plate, the second heating plate and the cover heating plate in accordance with the input user commands.

In this case, the control unit may be configured to control the temperature of the bottom heating plate so that it is lower than that of the first heating plate, to control the temperature of the second heating plate so that it is lower than that of the first heating plate, and to control the temperature of the cover heating plate so that it is lower than that of the second heating plate.

In this case, the control unit may be configured to control the heating time of the bottom heating plate so that it is shorter than that of the first heating plate, to control the heating time of the second heating plate so that it is shorter than that of the first heating plate, and to control the heating time of the cover heating plate so that it is shorter than that of the second heating plate.

Preferably, the apparatus for cooking pancakes according to the present invention may further include: a handle formed on the bottom heating plate, the first heating plate, the second heating plate, or the cover heating plate; and an elastic support member configured to elastically support at least one of the bottom heating plate, the first heating plate, the second heating plate, and the cover heating plate.

### Advantageous Effects

The apparatus for cooking pancakes according to the present invention has the following various effects.

First, the apparatus for cooking pancakes according to the present invention is provided with a plurality of heating plates and is thus capable of simultaneously cooking multiple pancakes.

Second, the apparatus for cooking pancakes according to the present invention is configured to cook pancake batter with an upper heating plate and a lower heating plate by vertically stacking a plurality of heating plates, so that multiple pancakes can be quickly cooked without occupying a wide area.

Third, the apparatus for cooking pancakes according to the present invention is configured to control the heating temperatures and times of heating plates according to a preset program, so that the apparatus for cooking pancakes enables even a beginner to easily cook pancakes and does not require a great deal of effort from a cook in cooking pancakes.

Fourth, the apparatus for cooking pancakes according to the present invention is configured to support heating plates with elastic members and to move the heating plates obliquely downward using a handle, so that multiple cooked pancakes can be easily removed from the heating plates.

### Description of Drawings

Fig. 1 is a diagram illustrating an apparatus for cooking pancakes according to the present invention;
Fig. 2 illustrates one example of a coupling structure for coupling heating plates and a vertical support housing according to the present invention;
Fig. 3 is a diagram illustrating an example of cooking using the apparatus for cooking pancakes according to the present invention;
Fig. 4 is a diagram illustrating a usage example when cooked pancakes are simultaneously removed; and
Fig. 5 is a functional block diagram illustrating a cooking control unit 200 according to the present invention.

### Best Mode

An apparatus for cooking pancakes according to the present invention is described in greater detail below with reference to the accompanying drawings.

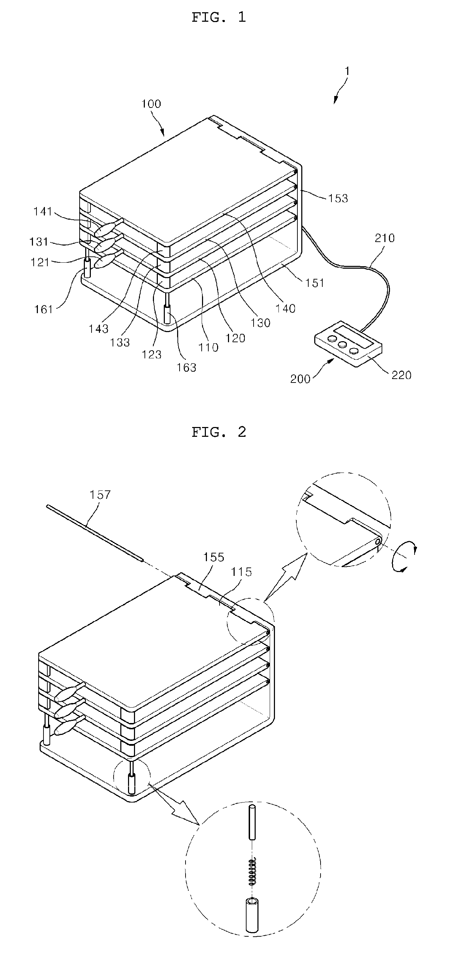

Fig. 1 is a diagram illustrating an apparatus for cooking pancakes according to the present invention. Referring to Fig. 1, the apparatus 1 for cooking pancakes according to the present invention includes a pancake cooking body 100, and a cooking control unit 200 electrically connected to the pancake cooking body 100 via a connection line 210. Pancakes are cooked by putting pancake batter into the pancake cooking body 100 and heating the pancake batter using heating plates. A user interface part configured to receive user commands adapted to set the heating temperatures and times of the heating plates is formed on one surface of a housing of the cooking control unit 200. A control unit configured to control the heating temperatures and times of the heating plates in accordance with the input user commands is provided within the housing of the cooking control unit 200.

A cook puts pancake batter onto heating plates 110, 120, 130 and 140. When pancakes have been completely cooked, the cook removes the pancakes placed on the respective heating plates 110, 120 and 130 by moving handles 111, 121, 131 and 141 upward, or simultaneously removes the multiple pancakes by moving the handles 111, 121, 131 and 141 downward.

The housing 150 of the pancake cooking body 100 includes a horizontal support housing 151, and a vertical support housing 153 vertically disposed on the horizontal support housing 151. The first ends of the heating plates 110, 120, 130 and 140 are hinged to the vertical support housing 153. The remaining ends of the heating plates 110, 120, 130 and 140 are supported by elastic support members 160 disposed on the horizontal support housing 151, and are disposed above the horizontal support housing 151.

A plurality of heating plates are disposed above the horizontal support housing 151. Above the horizontal support housing 151, a bottom heating plate 110, a first heating plate 120, a second heating plate 130 and a cover heating plate 140 are sequentially disposed in a vertical direction in a spaced-apart relationship. In this case, a first spacing member 123 is formed between the bottom heating plate 110 and the first heating plate 120. A second spacing member 133 is formed between the first heating plate 120 and the second heating plate 130. A third spacing member 143 is formed between the second heating plate 130 and the cover heating plate 140. The first spacing member 123 is integrated with the bottom heating plate 110 or the first heating plate 120. The second spacing member 133 is integrated with the first heating plate 120 or the second heating plate 130. The third spacing member 143 is integrated with the second heating plate 130 or the cover heating plate 140.

The bottom heating plate 110, the first heating plate 120, the second heating plate 130 and the cover heating plate 140 are coupled to the horizontal support housing 151 by a rotational coupling means (not illustrated), and are rotated clockwise. When the heating plates 110, 120, 130 and 140 are horizontally disposed with respect to one another, the heating plates 110, 120, 130 and 140 are spaced apart from one another by the thickness of the spacing members 123, 133 and 143.

A heating wire is formed across the central portion of each of the bottom heating plate 110, the first heating plate 120, the second heating plate 130, and the cover heating plate 140. Conductive coating surfaces are formed above and below the heating wire. Accordingly, when electric power is applied to the heating wire, the upper and lower conductive heating surfaces are heated.

A first elastic support member 161 is disposed on the left side of one end of the horizontal support housing 151. A second elastic support member 163 is disposed on the right side of one end of the horizontal support housing 151. When the handles 111, 121, 131 and 141 are moved downward, the height of the first elastic support member 161 and the second elastic support member 163 is reduced. Accordingly, the heating plates 110, 120, 130 and 140 are inclined downward. This makes it possible to easily and simultaneously take out the pancakes placed on the respective heating plates 120, 130 and 140. When the force used to move the handles 111, 121, 131 and 141 downward is eliminated, the heating plates 110, 120, 130 and 140 are rotated back to the positions parallel to the horizontal support housing 151.

Depending on the field to which the present invention is applied, the elastic support members may be disposed in various positions on the horizontal support housing 151 or on the vertical support housing 153 so as to elastically support the heating plates 110, 120, 130 and 140. These fall within the scope of the present invention.

Depending on the field to which the present invention is applied, the spacing members may be formed at first ends of the heating plates 110, 120, 130 and 140 or in the vertical support housing 153 so as to maintain the heating plates 110, 120, 130 and 140 in a horizontally spaced-apart relationship with one another. These fall within the scope of the present invention.

Fig. 2 illustrates one example of a coupling structure for coupling the heating plates and the vertical support housing according to the present invention.

Referring to Fig. 2, the coupling unit is configured to couple the vertical support housing 153 and the heating plates 110, 120, 130 and 140 so that the heating plates can be rotated in the same rotation direction. One example of the coupling unit will be described in detail. A plurality of housing coupling lugs 155 are vertically formed along both ends of the vertical support housing 153. Meanwhile, a plurality of plate coupling grooves 115 are formed on the surfaces of the heating plates 110, 120, 130 and 140 opposite the vertical support housing 153 so as to engage with the housing coupling lugs 155. Coupling rods 157 are inserted across the housing coupling lugs 155 and the plate coupling grooves 115. Accordingly, the respective heating plates 110, 120, 130 and 140 are rotatably coupled to the vertical support housing 153.

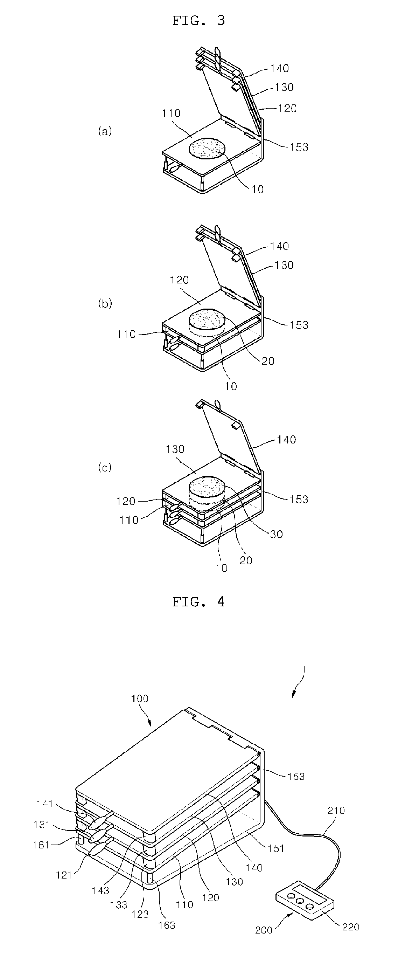

Fig. 3 is a diagram illustrating an example of cooking using the apparatus for cooking pancakes according to the present invention.

Referring to Fig. 3(a), the heating plates 120, 130 and 140 are opened through the rotation thereof, and only the bottom heating plate 110 is horizontally disposed. After pancake batter 10 has been put onto the upper surface of the bottom heating plate 110, the first heating plate 120 is rotated and horizontally disposed. Thereafter, after pancake batter 20 has been put onto the upper surface of the first heating plate 120, the second heating plate 130 is rotated and horizontally disposed. Thereafter, after pancake batter 30 has been put onto the upper surface of the second heating plate 130, the cover heating plate 140 is rotated and horizontally disposed.

The pancake batter 10 is simultaneously heated from above and below by the bottom heating plate 110 and the first heating plate 120 and, thus, can be quickly cooked. The pancake batter 20 is simultaneously heated from above and below by the first heating plate 120 and the second heating plate 130 and, thus, can be quickly cooked. The pancake batter 30 is simultaneously heated from above and below by the second heating plate 130 and the cover heating plate 140 and, thus, can be quickly cooked.

In this case, the respective heating plates 110, 120, 130 and 140 are spaced apart a predetermined distance by the spacing members. Accordingly, when cooked, the pancakes are not vertically expanded above the spaced-apart distance but are spread in a lateral direction.

When the cooking of the pancakes has been completed, the cook removes the cooked pancakes one by one by holding the handles 111, 121, 131 and 141 and sequentially opening the heating plates 120, 130 and 140, or simultaneously removes the cooked pancakes from the heating plates 110, 120 and 130 by pushing down one of the handles 111, 121, 131 and 141. Fig. 4 is a diagram illustrating a usage example when the cooked pancakes are simultaneously removed. If the user holds one of the handles 111, 121, 131 and 141 and applies a force thereto in a downward direction, the elastic members 161 and 163 are compressed in the direction of the force, so that the respective heating plates 110, 120, 130 and 140 are inclined downward and the pancakes 10, 20 and 30 placed on the respective heating plates 110, 120 and 130 are removed by the weight thereof.

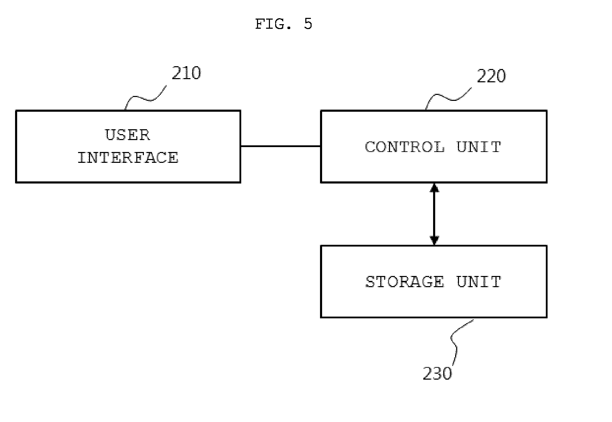

Fig. 5 is a functional block diagram illustrating the cooking control unit 200 according to the present invention.

Referring to Fig. 5, user commands adapted to control the heating times and heating temperatures of the heating plates 110, 120, 130 and 140 are input via the user interface unit 210. Preferably, the user inputs user commands for setting a pancake cooking program via the user interface unit 210. A control unit 220 extracts a cooking program corresponding to the input user commands from a storage unit 230, and controls the heating temperatures and heating times of the heating plates 110, 120, 130 and 140 according to the extracted cooking program. Since the control unit 220 automatically controls the heating temperatures and heating times of the heating plates 110, 120, 130 and 140 according to the preset cooking program, the cook can do other works while cooking the pancakes, and even a beginner can easily cook the pancakes.

In the apparatus for cooking pancakes according to the present invention, pancakes are cooked by first putting pancake batter onto the bottom heating plate 110 and finally closing the cover heating plate 140. For this reason, in one embodiment, the temperature of the bottom heating plate is controlled such that it is lower than that of the first heating plate. The temperature of the second heating plate is controlled such that it is lower than that of the first heating plate. The temperature of the cover heating plate is controlled such that it is lower than that of the second heating plate.

Preferably, in another embodiment, the control unit 220 controls the heating time of the bottom heating plate so that it is shorter than that of the first heating plate, controls the heating time of the second heating plate so that it is shorter than that of the first heating plate, and controls the heating time of the cover heating plate so that it is shorter than that of the second heating plate.

Although the present invention has been described with reference to the embodiments illustrated in the accompanying drawings, this description is merely illustrative. It will be appreciated by those skill in the art that various modifications and other equivalent embodiments can be made. Therefore, the true scope of the technical spirit of the present invention should be defined based on the technical spirit of the attached claims.

## Claims

1. An apparatus for cooking pancakes, comprising:
a bottom heating plate provided with a heating wire;
a first heating plate placed above the bottom heating plate, and provided with a heating wire;
a second heating plate placed above the first heating plate, and provided with a heating wire;
a cover heating plate placed above the second heating plate, and provided with a heating wire; and
a coupling unit configured to couple the bottom heating plate, the first heating plate, the second heating plate and the cover heating plate to a vertical support housing of a main body housing, and configured to allow the first heating plate, the second heating plate and the cover heating plate to rotate in an identical rotation direction.

2. The apparatus of claim 1, further comprising:
a first spacing member configured to keep the bottom heating plate and the first heating plate spaced apart;
a second spacing member configured to keep the first heating plate and the second heating plate spaced apart; and
a third spacing member configured to keep the second heating plate and the cover heating plate spaced apart.

3. The apparatus of claim 2, further comprising:
a user interface unit configured to receive user commands; and
a control unit configured to control heating temperatures and heating times of the bottom heating plate, the first heating plate, the second heating plate and the cover heating plate in accordance with the input user commands.

4. The apparatus of claim 3, wherein the control unit is configured to control the temperature of the bottom heating plate so that it is lower than that of the first heating plate, to control the temperature of the second heating plate so that it is lower than that of the first heating plate, and to control the temperature of the cover heating plate so that it is lower than that of the second heating plate.

5. The apparatus of claim 3, wherein the control unit is configured to control the heating time of the bottom heating plate so that it is shorter than that of the first heating plate, to control the heating time of the second heating plate so that it is shorter than that of the first heating plate, and to control the heating time of the cover heating plate so that it is shorter than that of the second heating plate.

6. The apparatus of any one of claims 1 to 5, further comprising:
a handle formed on the bottom heating plate, the first heating plate, the second heating plate, or the cover heating plate; and
an elastic support member configured to elastically support at least one of the bottom heating plate, the first heating plate, the second heating plate, and the cover heating plate.
